# EUROPÄISCHE PATENTANMELDUNG

(11) **EP 0 581 977 A1**
(43) Veröffentlichungstag der Anmeldung: **09.02.1994**
(21) Anmeldenummer: 92113179.3
(22) Anmeldetag: 03.08.1992
(51) Int. Cl.: B01D 45/12, B04C 5/28, B04C 5/185

(54) **Zyklonfilter**

(71) Anmelder: ABB RESEARCH LTD., CH-8050 Zürich 11 (CH)
(72) Erfinder: Keller, Jakob, Dr., Redmond, Washington, 98052 (US)

(57) **Zusammenfassung**

Der erfindungsgemässe Zyklonfilter besteht aus einer grossen Zahl einzelner Zyklonelemente (1), welche jeweils aus Drallkammer (4), zentralem Wirbelrohr (8), Drallregister (6) und Diffusor (7) aufgebaut sind, einer gemeinsamen Eintrittskammer (2) und einem gemeinsamen Abscheideraum (3), wobei zwischen Eintrittskammer (2) und Drallkammer (4) der Zyklonelemente (1) jeweils mindestens zwei tangentiale Zuführröhrchen (5) angebracht sind und die Zyklonelemente (1) einschliesslich der Wandungen des gemeinsamen Abscheideraumes (3) hochsymmetrisch nach dem Spiegelungsprinzip angeordnet sind. Mit dieser Vorrichtung können bei vertretbaren Kosten aus einer Gasströmung Teilchen bis zu einem Korndurchmesser von weniger als etwa 1 µm abgeschieden werden.

## Beschreibung

### Technisches Gebiet

Die Erfindung betrifft einen Zyklonfilter zur Abscheidung von Staubteilchen mit einem Durchmesser von kleiner 10 µm in einer Gasströmung.

### Stand der Technik

Es ist bekannt, dass zur Abscheidung von Staubteilchen in einer Gasströmung je nach Anwendungsbereich u. a. herkömmliche Zyklonfilter, Elektrofilter und Schlauchfilter eingesetzt werden.

Für die Teilchenabscheidung in heissen Gasen bei hohem Druck, z. B. in PFBC- oder IGCC-Anlagen, werden bis heute aus verschiedenen Gründen hauptsächlich Zyklonfilter eingesetzt. Der Nachteil der herkömmlichen Zyklonfilter mit einem Wirbelkammerdurchmesser von typischerweise 0,5 bis 1 m besteht darin, dass diese Filter nicht in der Lage sind, Partikel abzuscheiden, deren Duchmesser kleiner als ca. 10 µm ist. Daraus ergeben sich folgende schwerwiegende Probleme.

Zunächst verursachen Teilchen mit Durchmessern von mehr als ca. 3µm eine signifikante Festkörpererosion an der Turbinenbeschaufelung. Das führt zu einem starken Abfall der Lebens-dauer der Turbinenbeschaufelung. Ausserdem können vorhandene Schaufelkühlkanäle mit Partikeln verstopft werden.

Ein weiteres Problem besteht darin, dass bei Kohlevergasungs- oder Kohleverbrennungsanlagen Alkalimetalle bei Temperaturen von unterhalb etwa 800 °C an die Staubpartikel gebunden sind und bei Aufheizung der Gase auf höhere Temperaturen von den Staubpartikeln wieder freigesetzt werden. Falls also im Anschluss an eine unterstöchiometrische Kohlestaubverbrennung (Vergasung) Partikel nur sehr unvollständig abgeschieden werden, dann dürfen die Brenngase in überstöchiometrischen Nachverbrennungsprozessen nicht über etwa 800 °C hinauf aufgeheizt werden, weil sonst unzulässig grosse Mengen von Alkalimetallen freigesetzt würden, welche bei der Rückkondensation aufgrund der Abkühlung bei der Entspannung in der Turbine rasch zu Belägen auf der Turbinenbeschaufelung führen. Eine solche Belagsbildung führt erfahrungsgemäss auch zu einer schnellen Zerstörung der Turbinenbeschaufelung.

### Darstellung der Erfindung

Die Erfindung versucht all diese Nachteile zu vermeiden. Ihr liegt die Aufgabe zugrunde, einen Zyklonfilter zu schaffen, mit dem es möglich ist, aus einem staubbeladenen Gas Partikel bis zu einem Korndurchmesser von weniger als etwa 1 µm auf kostenmässig tragbare Art abzuscheiden.

Erfindungsgemäss wird dies dadurch erreicht, dass das Filter aus einer grossen Zahl einzelner Zyklonelemente, einer gemeinsamen Eintrittskammer und einem gemeinsamen Abscheideraum besteht, zwischen Eintrittskammer und den Drallkammern der Zyklonelemente jeweils mindestens zwei tangentiale Zuführröhrchen angebracht sind und die Zyklonelemente einschliesslich der Wandungen des gemeinsamen Abscheideraumes hochsymmetrisch nach dem Spiegelungsprinzip angeordnet sind.

Der Vorteil der Erfindung besteht darin, dass es mit diesem Zyklonfilter möglich ist, bei vertretbaren Kosten aus einer Gasströmung Partikel bis zu einem Korndurchmesser von weniger als etwa 1 µm abzuscheiden und dadurch beispielsweise die Festkörpererosion an der Turbinenbeschaufelung bzw. die Belagsbildung zu verhindern, was schliesslich zu einer Lebensdauererhöhung der Turbinenbeschaufelung führt.

Es ist besonders zweckmässig, wenn die Zyklonelemente aus Drallkammer, zentralem Wirbelrohr, Drallregister und Diffusor bestehen.

Ferner ist es vorteilhaft, wenn das Zyklonfilter aus einzeln gegossenen oder gepressten Zyklonelementen zusammengesetzt ist oder aus einer gegossenen oder gepressten Gesamtmatrix der Zyklonelemente besteht.

Schliesslich werden mit Vorteil ähnlich dimensionierte Drallkammern in den Zyklonelementen angeordnet wie die Drallkammern in Simplexzerstäubern.

### Kurze Beschreibung der Zeichnung

In der Zeichnung ist ein Ausführungsbeispiel der Erfindung dargestellt.
Es zeigen:
- Fig.1: einen Längsschnitt durch das Zyklonfilter
- Fig.2: einen Längsschnitt durch ein Zyklonelement
- Fig.3: die Anordnung der Zyklonelemente nach dem Spiegelungsprinzip
Es sind nur die für das Verständnis der Erfindung wesentlichen Elemente gezeigt. Die Strömungsrichtung der Arbeitsmittel ist mit Pfeilen bezeichnet.

### Weg zur Ausführung der Erfindung

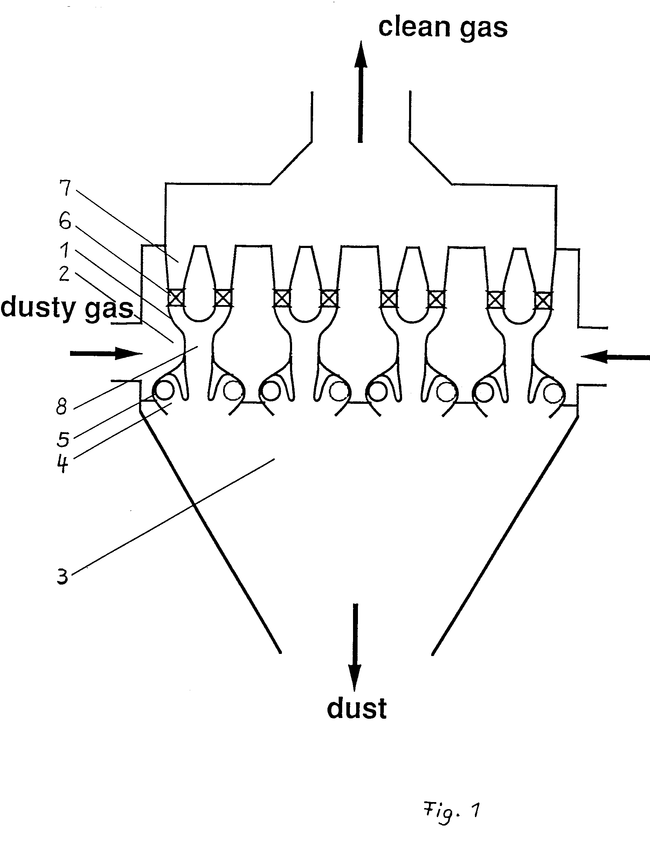

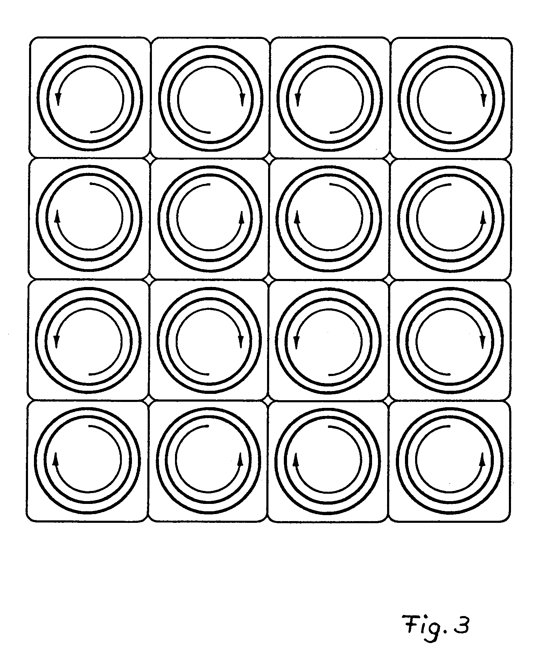

Das erfindungsgemässe Zyklonfilter ist gemäss Fig.1 aus einer grossen Zahl einzelner Zyklonelemente 1 aufgebaut. Wie aus Fig. 3 zu entnehmen ist, sind es im vorliegenden Fall 16 Zyklonelemente 1. Weiterhin besitzt das Zyklonfilter eine gemeinsame Eintrittskammer 2 und einen gemeinsamen Abscheideraum 3, zwischen Eintrittskammer 2 und den Drallkammern 4 der Zyklonelemente 1 sind jeweils mindestens zwei tangentiale Zuführröhrchen 5 angebracht und die Zyklonelemente 1 sind einschliesslich der Wandungen des gemeinsamen Abscheideraumes 3 hochsymmetrisch nach dem Spiegelungsprinzip angeordnet sind.

Die Zyklonelemente 1 bestehen jeweils aus Drallkammer 4, zentralem Wirbelrohr 8, Drallregister 6 und Diffusor 7.

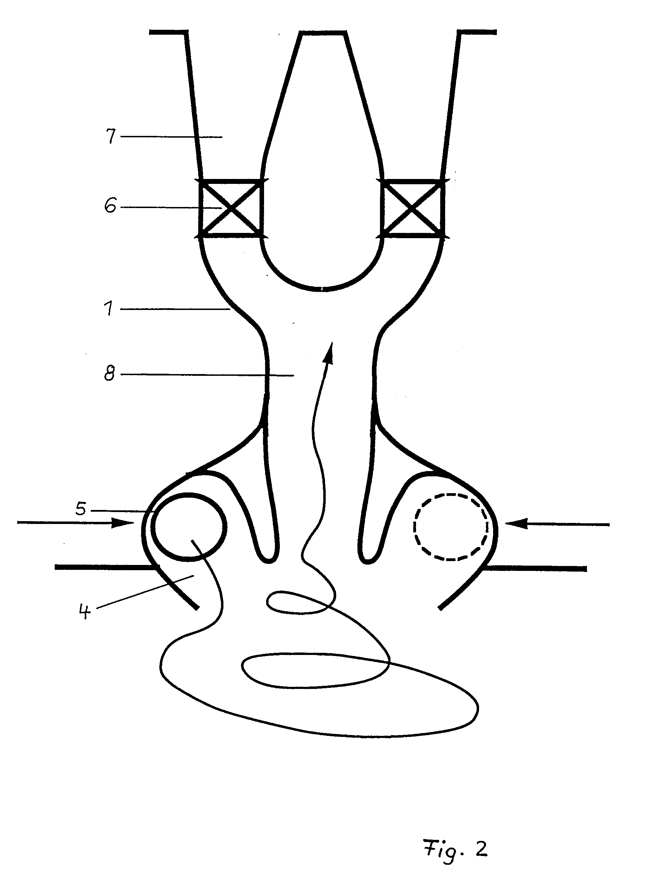

Das staubbeladene Gas wird zunächst der gemeinsamen Eintrittskammer 2 zugeführt und gelangt von dort durch jeweils mindestens zwei tangentiale Zuführröhrchen 5 in die Drallkammern 4 der Zyklonelemente 1 (siehe Fig. 2). Die Drallkammern 4 der Zyklonelemente 1 erzeugen einzelne Hohlwirbelströmungen, welche nach dem Austritt aus den Drallkammern 4 der Zyklonelemente 1 in den gemeinsamen Abscheideraum 3 gelangen.

Die Partikelabscheidung geschieht ausserhalb der Zyklonelemente 1 im gemeinsamen Abscheideraum 3, d. h. abgesehen von den äusseren Begrenzungswänden sind zur Abscheidung keine Wände erforderlich, die später zu Verschmutzungsproblemen führen können.

Die Drallkammern 4 werden ähnlich dimensioniert wie die Drallkammern von Simplexzerstäubern. Genau wie beim Simplex-Drallzerstäuber durchlaufen die Hohlwirbelströmungen beim Austritt aus den Drallkammern 4 jeweils ihren kritischen Querschnitt, d. h. beim Austritt aus einer Drallkammer 4 erreicht eine Hohlwirbelströmung jeweils gerade die kritische Drallzahl. Damit die einzelnen Wirbelströmungen im freien gemeinsamen Abscheideraum 3 nicht von den Wirbelströmungen der benachbarten Zyklonelemente 1 gestört werden (gegenseitige Beeinflussung durch Biot-Savart-Kräfte), sind die Zyklonelemente 1 einschliesslich der Wandungen des gemeinsamen Abscheideraumes 3 nach dem Spiegelungssystem hochsymmetrisch angeordnet. Fig. 3 zeigt schematisch einen Blick von unten (in Fig. 1) auf die Drallkammern 4 der Zyklonelemente 1. Dank der hochsymmetrischen Anordnung heben sich die Biot-Savart-Kräfte der Nachbarwirbel auf einen bestimmten Wirbel jeweils gerade auf. Aufgrund der sich einstellenden Druckverhältnisse (Eintritt/Abscheideraum/oberer Austritt) werden die einzelnen Wirbelströmungen nach erfolgter Staubabscheidung in die zentralen Wirbelrohre 8 der Zyklonelemente 1 zurückgeführt.

Mit Hilfe eines am Ende der zentralen Wirbelrohre 8 jeweils angeordneten Drallregisters 6 werden die Einzelströmungen vom Drall befreit. Die Drallregister 4 dienen der Rückgewinnung von statischem Druck. Im Anschluss an das Drallregister 4 wird die Strömung ausserdem in einem Diffusor 7 abgebremst. Dadurch kann der Druckverlust zusätzlich abgesenkt werden. Der erfindungsgemässe Aufbau der Zyklonelemente erlaubt bei akzeptablem Druckabfall hohe Geschwindigkeiten in den Drallkammern 4. Damit wird die Gefahr einer Belagsbildung an den Wandungen der Drallkammern 4 beseitigt.

In einem Beispiel beträgt der Durchmesser des zentralen Wirbelrohres 8 eines Zyklonelements 1 ca.1 bis 2 cm. Die azimutale Geschwindigkeitskomponente w liegt bei ca. 100 m/s. Eine typische radiale oder axiale Geschwindigkeitskomponente u ist etwa fünfmal kleiner als w, also ca. 20 m/s. Der Grenzkorndurchmesser lässt sich approximativ nach folgenden Formeln berechnen:
Für turbulente Strömungen gilt:

D_{c} = 0,3 * ρ/ρₚ * {u/w}² * R

Für laminare Strömungen gilt:

D_{c}² = 18 * ρ/ρₚ * {u/w}² * γR/u

Hierbei bezeichnen
- D_{c}: den Grenzkorndurchmesser
- ρ: die Dichte des Gases
- ρₚ: die Dichte der Partikel
- u: die radial-axiale Geschwindigkeitskomponente
- w: die azimutale Geschwindigkeitskomponente
- R: den Radius des zentralen Wirbelrohres
- γ: die kinematische Zähigkeit des Gases
Bei Reynoldszahlen Re_{D} = D_{c}u/γ, die grösser als etwa 1000 sind, gilt die Näherung für turbulente Strömungen (obere Formel), während bei Reynoldszahlen, die kleiner als etwa 100 sind, die untere Näherung für laminare Strömungen zur Anwendung kommt.

Bei typischen Abscheidebedingungen nach einer Kohlevergasung (Druck ≈ 20 bar, Gastemperatur ≈ 500 °C) und den vorgenannten Zyklondaten kommt die Formel für laminare Strömungen zur Anwendung. Es ist zu sehen, dass ein solcher "Superzyklon" Teilchen bis weit unter die Korndurchmessergrenze von 1 µm abscheidet und damit die o. g. Nachteile des Standes der Technik beseitigt sind.

### Bezugszeichenliste

- 1: Zyklonelement
- 2: gemeinsame Eintrittskammer
- 3: gemeinsamer Abscheideraum
- 4: Drallkammer
- 5: tangentiale Zuführröhrchen
- 6: Drallregister
- 7: Diffusor
- 8: zentrales Wirbelrohr

## Patentansprüche

1. Zyklonfilter dadurch gekennzeichnet, dass das Filter aus einer grossen Zahl einzelner Zyklonelemente (1), einer gemeinsamen Eintrittskammer (2) und einem gemeinsamen Abscheideraum (3) besteht, zwischen Eintrittskammer (2) und den Drallkammern (4) der Zyklonelemente (1) jeweils mindestens zwei tangentiale Zuführröhrchen (5) angebracht sind und die Zyklonelemente (1) einschliesslich der Wandungen des gemeinsamen Abscheideraumes (3) hochsymmetrisch nach dem Spiegelungsprinzip angeordnet sind.

2. Zyklonfilter nach Anspruch 1, dadurch gekennzeichnet, dass ein Zyklonelement (1) aus Drallkammer (4), zentralem Wirbelrohr (8), Drallregister (6) und Diffusor (7) besteht.

3. Zyklonfilter nach Anspruch 1, dadurch gekennzeichnet, dass das Filter aus einzeln gegossenen oder gepressten Zyklonelementen (1) zusammengesetzt ist.

4. Zyklonfilter nach Anspruch 1, dadurch gekennzeichnet, dass das Filter aus einer gegossenen oder gepressten Gesamtmatrix der Zyklonelemente (1) besteht.

5. Zyklonfilter nach Anspruch 2, dadurch gekennzeichnet, dass die Drallkammern (4) ähnlich dimensioniert sind wie die Drallkammern von Simplexzerstäubern.
